# EUROPEAN PATENT APPLICATION

(11) **EP 1 494 414 A2**
(43) Date of publication of application: **05.01.2005**
(21) Application number: 04010104.0
(22) Date of filing: 28.04.2004
(51) Int. Cl.: H04L 29/00

(54) **Method and system for providing a virtual protocol interlayer**

(30) Priority: 30.06.2003 US 610397
(71) Applicant: MICROSOFT CORPORATION, Redmond, WA 98052 (US)
(72) Inventor: Draves, Richard Powell, Jr., Seattle, Washington 98112 (US)
(74) Representative: Grünecker, Kinkeldey, Stockmair & Schwanhäusser Anwaltssozietät

(57) **Abstract**

Disclosed is a virtual protocol "interlayer" between two protocol layers in a communications stack. When a communications task needs to be performed, but implementation within the existing protocol layers may hinder deployment due to issues of compatibility, the methods of the present invention are used to create an interlayer to handle the task. An addressing scheme peculiar to the interlayer is set up. The interlayer frees the other layers in the protocol stack to operate as before, leaving to the interlayer the specifics of performing the communications task. In one embodiment, an interlayer is built between the ISO/OSI protocol layers 2 and 3. Source routing is performed within this interlayer, using interlayer addresses. By using interlayer addresses rather than layer 2 or layer 3 addresses, this embodiment of source routing allows compatibility both with multiple layer 3 protocols and with multiple layer 2 network interfaces.

## Description

### TECHNICAL FIELD

The present invention is related generally to computer network communications, and, more particularly, to layered communications protocols.

### BACKGROUND OF THE INVENTION

Modem computer network systems are growing to be very complex, involving many disparate communications tasks in addition to the basic task of moving messages from one computer to another. To handle this growing complexity, many, though not quite all, communications protocols are divided into "layers," with each layer handling some important communications tasks while leaving other tasks to other layers. The International Standards Organization Open Systems Interconnection (ISO/OSI) protocol model is a theoretical construct which assigns communications tasks among the model's "stack" of seven layers. In this model, the overall task of enabling network communications is divided into subtasks and those subtasks are each assigned to a logical layer in the protocol stack. The stack is hierarchical: Each layer has a defined interface with the layers above and below it (except, of course, for the uppermost and lowermost layers). Logically, each layer communicates with its peer layer on another computer, provides services to the layer above it in the stack, and uses the services provided by the layer below it. Physically, messages flow down the stack from their source until the physical layer actually transmits them across the medium of the network connection. When messages are received by their intended recipient computer, they are passed up the stack with each layer stripping off and responding to the data meant for it while passing the rest of the messages up to the next level. For example, the network layer (layer 3) defines how messages are routed among networks. The network layer on one computer logically speaks with the network layer on another computer by passing a packet of data down to the data layer (layer 2) on its own computer. The data layer in turn adds a header to the network layer's packet thus creating a data frame which it passes to the physical layer (layer 1). The physical layer uses the physical network medium to transmit that data frame. When the data frame is received by the recipient computer, the recipient's data layer reads the data frame, stripping from it the header information meant for its own use. Then the data layer takes the rest of the frame, consisting of the source computer's data packet, and sends it up to the network layer. Thus, the network layer on the recipient reads the packet as sent by the network layer on the source without having to decode the data layer header and other information used by the lower layers to transmit the data packet.

The primary advantage of this layered model is that each protocol layer can communicate with its peers without concerning itself with the myriad details handled by other layers in the protocol stack. That is, each layer performs its communications tasks mostly independently of the tasks performed by the other layers. This promises flexibility in implementation. For example, a particular implementation of one layer (e.g., an Institute of Electrical and Electronics Engineers (IEEE) 802 Ethernet Data Layer 2) accommodates any number of implementations of the protocol layer above it (e.g., multiple ISO/OSI Internetworking Protocol Layer 3s). Thus, a new layer 3 protocol can be introduced to advance the art of network communications while at the same time remaining compatible with the installed infrastructure of layer 2 devices. Similarly, a given upper protocol layer operates over multiple disparate lower layers. Thus, one computer can run a single layer 3 over both an Ethernet layer 2 interface and a wireless interface. This flexibility has enabled layered protocols to survive and to grow for over twenty years.

This flexibility invites multiple embodiments of each layer, the embodiments optimized for particular situations and all running over the same lower layers. However, the layered protocol's promise of compatibility *between* layers does not carry over to multiple embodiments *within* one layer. For example, the ISO/OSI model does not assure, a priori, 'that a new layer 3 protocol (eg., IPv6) will interoperate with previous versions (e.g., IPv4). This problem is not based on the particulars of the ISO/OSI model but is endemic to layered protocols in general.

As an example of this intra-layer compatibility problem, consider the communications task of routing data within a wireless network. (This example is illustrated and explained in greater detail in the Detailed Description section below.) In a traditional, wired network, devices can communicate directly with other devices ("local devices") within the network and can communicate directly with a router for sending data to devices ("remote devices") beyond the boundaries of the local network. However, a device in a wireless network may not be able to directly communicate with all of the other local devices due to noise, interference, and distance between the devices. Similarly, a device may not be able to communicate directly with a router that connects the wireless network to the wired Internet. Thus, a wireless device can have difficulties in sending messages both to local and to remote devices. In some wireless networks, protocols have been implemented to address these problems. In these networks, wireless devices help one another by retransmitting intercepted messages intended for other devices. This allows a message sent by a source device to "hop" or pass through several intermediary devices before arriving at the intended recipient.

Implemented blindly, this retransmission model could lead to inefficiencies as messages travel in "loops" before reaching their intended recipients. In one set of approaches to averting chaos, methods of "source routing protocols" are applied. An example is detailed below, but for now suffice it to say that the source discovers a route, potentially through several intermediary devices, to the intended recipient. Only devices along the source route retransmit intercepted messages, thus enabling delivery while reducing inefficient excess rebroadcast traffic. Non-source routing approaches to this problem have also been developed.

Source routing generally works as advertised, but it well illustrates the intra-layer compatibility problems of layered protocols. The problems arise when deciding where within the layered protocol stack to place source routing. If the source routing protocol is made a part of the layer 3 protocol, and thus uses layer 3 addresses, then the layered protocol model allows the source routing protocol to work with multiple layer 2s. This is a significant advantage when devices in a network use different wireless protocols or when the network includes both wired and wireless devices (or when a single device has both a wired and a wireless network interface). However, as mentioned above, different layer 3 protocols do not necessarily work with one another. Thus, a layer 3 source route developed for, say, the IPv4 layer 3 protocol would not work with devices using other layer 3 protocols such as IPv6 and IPX. This problem is moved but not solved by putting the source routing protocol in layer 2 and using layer 2 addresses. In order to allow a layer 2 source route to span multiple types of layer 2 network interfaces, the source routing protocol would have to be re-implemented for each layer 2 technology. Difficulties also arise because different layer 2 network interfaces such as Ethernet and Bluetooth (a wireless network standard) can use different, and incompatible, formats for their addresses.

In order to develop and to address new communications tasks, layered protocol systems must accommodate new protocols at each layer. The layered model helps to make sure that a new protocol is compatible with other protocols *above* and *below* it in the protocol stack. However, as the source routing example shows, incompatibility of protocols *within* a given layer hinders the full realization of the promise of layered protocols.

### SUMMARY OF THE INVENTION

In view of the foregoing, the present invention provides a virtual protocol "interlayer" between two protocol layers in a communications stack. When a communications task needs to be performed, but implementation within the existing protocol layers may hinder deployment due to issues of compatibility, the methods of the present invention are used to create an interlayer to handle the task. An addressing scheme peculiar to the interlayer is set up. The interlayer frees the other layers in the protocol stack to operate as before, leaving to the interlayer the specifics of performing the communications task.

The details of the operation of a protocol interlayer are dependent upon the particulars of the task, or tasks, it is called upon to perform. If necessary, one communicating device can simultaneously support more than one interlayer, although performance issues could hinder the multiplication of interlayers.

Techniques already used at other protocol layers can be modified to assign and to discover interlayer addresses in the requisite networking environment. In some embodiments, each network interface on each network device is assigned its own globally unique interlayer address In embodiments where each network device is assigned a single interlayer address, interface identifiers can be added to the interlayer address to distinguish among multiple network interfaces on a network device.

In some embodiments, a protocol interlayer is introduced with no change to the protocol layers above and below it. For example, the interlayer presents to the layer above it (e.g., layer 3) the same interface presented by the layer below it (e.g., layer 2). Thus, the existing upper protocol layer interacts with the interlayer just as it used to interact with the lower protocol layer. Other embodiments require just a small change to a protocol layer adjacent to the interlayer. For example, a new protocol header flag in a received message can be recognized by a lower layer, using existing techniques, causing the lower layer to pass the message on to the interlayer rather than process the message itself or pass it on to the upper layer.

Source routing is a useful example for demonstrating the utility of the protocol interlayer. In one embodiment, an interlayer is built between the ISO/OSI protocol layers 2 and 3. Source routing is performed within this interlayer, using interlayer addresses. By using interlayer addresses rather than layer 2 or layer 3 addresses, this embodiment of source routing allows compatibility both with multiple layer 3 protocols and with multiple layer 2 network interfaces.

### BRIEF DESCRIPTION OF THE DRAWINGS

While the appended claims set forth the features of the present invention with particularity, the invention, together with its objects and advantages, may be best understood from the following detailed description taken in conjunction with the accompanying drawings of which:

Figure 1 is a block diagram of a communications environment supporting both wired and wireless hosts;

Figures 2a through 2c together form a dataflow diagram illustrating how, by using a source route, two hosts in Figure 1 can communicate with one another via an intermediary device;

Figure 3 is a data structure diagram of a source route that uses interlayer addresses;

Figure 4 is a schematic diagram generally illustrating an exemplary computer system that supports the present invention;

Figure 5a is a logical diagram of the International Standards Organization Open Systems Interconnection (ISO/OSI) model for hierarchically-layered, network communications protocols; Figure 5b is a block diagram showing some of the communications tasks involved in running an ISO/OSI protocol stack;

Figure 6 is a schematic diagram presenting one possible software implementation for performing the tasks described with respect to Figure 5b;

Figure 7 is a flowchart showing an exemplary method according to the present invention for an upper protocol layer to interact with a protocol interlayer;

Figure 8 is a data structure diagram of an address association table;

Figures 9a and 9b together form a flowchart of an exemplary protocol interlayer responding to a message received from an upper protocol layer;

Figure 10 is a flowchart of a method usable by an exemplary lower protocol layer when receiving a message intended for a protocol interlayer;

Figure 11 is a data structure diagram of an exemplary data frame containing an interlayer header;

Figures 12a and 12b together form a flowchart of an exemplary protocol interlayer responding to a message received from a lower protocol layer;

Figure 13 is a flowchart of an exemplary method for assigning and discovering interlayer addresses; and

Figures 14a and 14b together form a dataflow diagram showing how the Address Resolution Protocol can work in the presence of a protocol interlayer.

### DETAILED DESCRIPTION OF THE INVENTION

Turning to the drawings, wherein like reference numerals refer to like elements, the present invention is illustrated as being implemented in a suitable computing environment. The following description is based on embodiments of the invention and should not be taken as limiting the invention with regard to alternative embodiments that are not explicitly described herein.

In the description that follows, the present invention is described with reference to acts and symbolic representations of operations that are performed by one or more computing devices, unless indicated otherwise. As such, it will be understood that such acts and operations, which are at times referred to as being computer-executed, include the manipulation by the processing unit of the computing device of electrical signals representing data in a structured form. This manipulation transforms the data or maintains them at locations in the memory system of the computing device, which reconfigures or otherwise alters the operation of the device in a manner well understood by those skilled in the art. The data structures where data are maintained are physical locations of the memory that have particular properties defined by the format of the data: However, while the invention is being described in the foregoing context, it is not meant to be limiting as those of skill in the art will appreciate that various of the acts and operations described hereinafter may also be implemented in hardware.

The present invention provides a virtual protocol "interlayer" between two protocol layers in a communications stack. When a communications task needs to be performed, but implementation within the existing protocol layers may hinder deployment due to issues of compatibility, an interlayer is created, with its own addressing scheme, to handle the task.

The methods of the present invention are broadly applicable and are thus somewhat abstract in their general conception. The following description focuses on specific implementations in order to illustrate that general conception. Source routing is a useful example for demonstrating the utility of the protocol interlayer. In one embodiment discussed below, an interlayer is built between the ISO/OSI protocol layers 2 and 3. Source routing is performed within this interlayer, using interlayer addresses. By using interlayer addresses rather than layer 2 or layer 3 addresses, this embodiment of source routing allows compatibility both with multiple layer 3 protocols and with multiple layer 2 network interfaces. The utility of the present invention is not limited to source routing, however: Protocol interlayers can be developed to perform other communications tasks as well.

Source routing is a set of techniques developed for situations where traditional routing methods do not apply. First, consider how traditional routing works. For a device on a traditional, wired network, all other devices are divided into two general classes. "Local" devices are locating with the same local network and can be accessed directly. "Remote" devices lie beyond the boundaries of the local network and are accessed through a router. The router is a local device. Traditional routing methods are based on this dichotomy of local and remote devices. When sending to a local device, the source device simply addresses the message to the intended recipient and puts the message out onto the local network. All local devices, including the intended recipient, receive the message. (This simplistic view does not always hold in real networks. For example, Ethernet switches do not propagate Ethernet frames to local links that do not contain the addressed device. However, the simplistic view holds for purposes of illustration. The manner in which Ethernet switches discover the locations of local devices and limit retransmissions accordingly is an excellent example of "ad hoc" routing in a non-wireless network.) All local devices, except the intended recipient, then discard the message. The intended recipient reads the message and responds accordingly.

When the intended recipient is remote from the source device, traditional routing often, though not exclusively, applies a "shortest path" algorithm. The source device (or, more likely, a router on the source device's network) considers the shortest path to the intended recipient and sends the source's message on to the next device on that shortest path. When the next device receives the message, it examines the recipient address and either accepts the message, if this device is the intended recipient, or again applies the shortest path algorithm to send the message along. Eventually, the message arrives at the intended recipient. Note that each device routing the message, the source and all of the intermediates, makes its own choice as to where to send the message next. Routers periodically share end-to-end network topology information to allow each of them to correctly choose the shortest path.

However, traditional routing techniques break down in networks that support devices that communicate using short range, wireless protocols. A first reason for this is the vastly accelerated pace of change in the wireless network. Wireless devices enter and leave the networking environment so quickly that traditional techniques of discovering network topological information cannot keep up. Secondly, wireless devices can disagree as to which other devices are currently in the network and which are not. Both of these considerations violate the traditional model of topological information that is knowable in the two senses of being relatively unchanging and of being universally acknowledged.

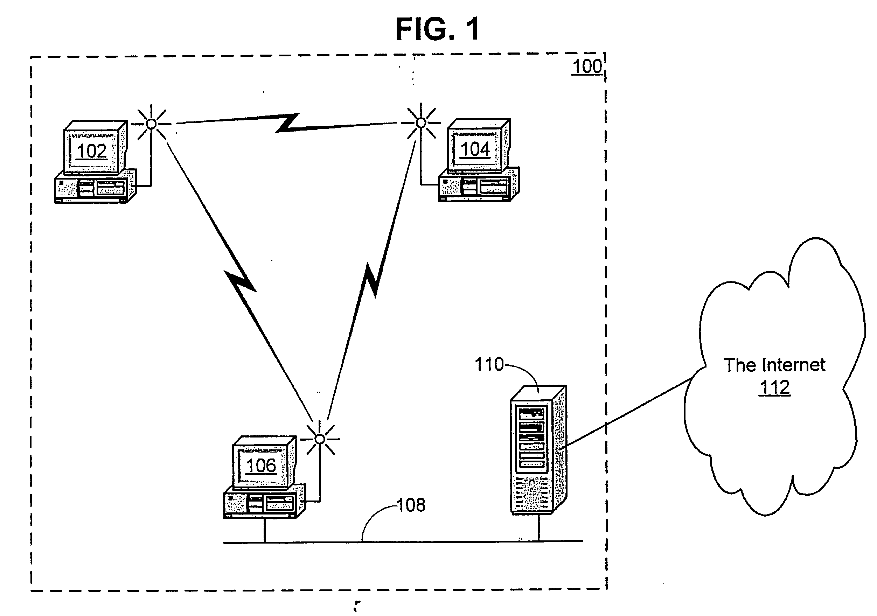

Consider the network communications environment of Figure 1. In the "ad hoc" wireless network 100, devices 102, 104, and 106 can all communicate wirelessly with one another (as implied by the elongated "Z"s). (In this context, "ad hoc" means that there is no central configuration management for the network 100 and thus, no central repository for the address and topological information relied on so heavily by traditional routing algorithms.) The device 106 also has a wired local area network (LAN) connection 108 to another device 110. That device 110 is, among other things, a router that connects the ad hoc wireless network 100 to the Internet 112. However, because this device 110 has no wireless receiver, wireless-only devices 102 and 104 cannot communicate directly with it, nor, without some assistance, can they communicate through the router 110 to the Internet 112.

To address these problems, the wireless devices help one another by retransmitting intercepted messages intended for other devices. This allows a message sent by a source device to "hop" or pass through several intermediary devices before arriving at the intended recipient. Source routing protocols form one set of approaches to prevent transmission "loops" wherein a message passes through the same intermediary device more than once on its way to the intended recipient. In short, the source device discovers a route, potentially through several intermediary devices, to the intended recipient. Only devices along the source route retransmit intercepted messages, thus enabling delivery while reducing inefficient excess rebroadcast traffic. While, for purposes of clarity, the present discussion uses source routing to illustrate the methods of the present invention, those methods are equally applicable to the non-source routing approaches to this problem that have also been developed.

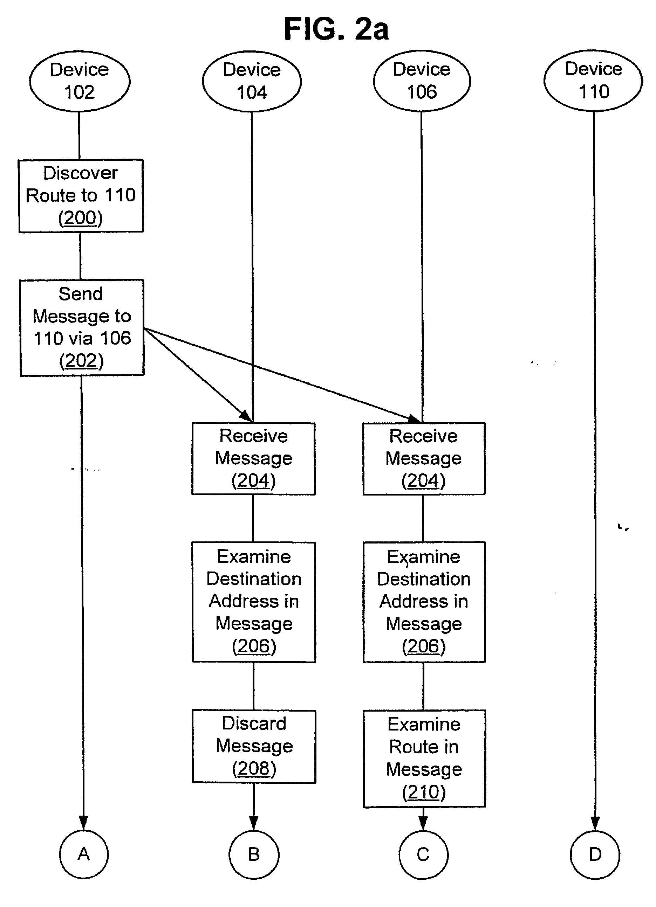

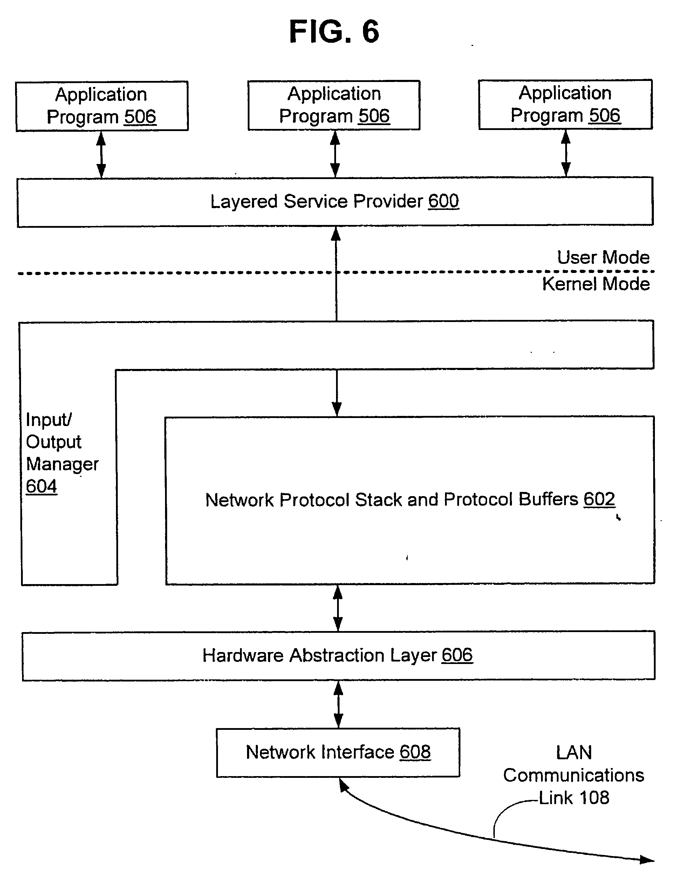

The dataflow diagram of Figures 2a through 2c illustrates a simple source routing scenario. This scenario is first presented at a very high level. Then, following the discussion of Figure 6, the scenario is revisited with more attention paid to addressing details.

The device 102 wishes to send a message to the device 110. The nature of the message is not important for this discussion; it could be intended for an application running on the device 110 or it could sent to the device 110 in order to be routed to another device on the Internet 112. In any case, the device 102 cannot communicate directly with the device 110 so, in step 200 of Figure 2a, the device 102 discovers a source route to the device 110.

The discovered source route passes through the device 106, with which the device 102 can directly communicate and which can in turn communicate directly with the device 110. Many protocols exist for discovering this source route, and their complexities are beyond the scope of the present discussion. For more background on source routing and for details of a particular source routing protocol, consider the Internet Engineering Task Force Internet Draft "The Dynamic Source Routing Protocol for Mobile and Ad Hoc Networks (DSR)," incorporated by reference herein in its entirety.

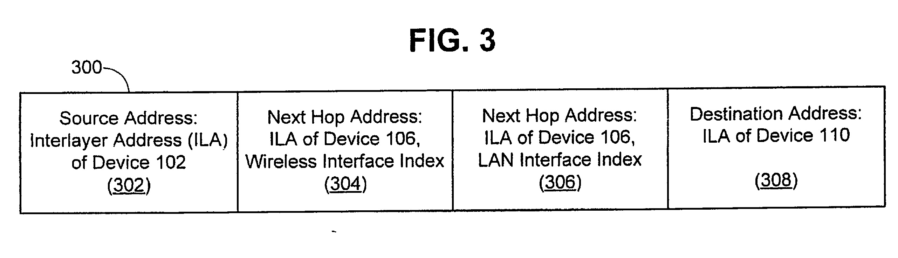

Figure 3 illustrates the source route 300. The source route 300 begins at the source device 102 (field 302), and then goes to the device 106 (field 304). As the device 106 has two network interfaces, one to the wireless devices in the ad hoc network 100 and the other to the LAN 108, the field 304 also specifies which of those two interfaces will receive the message from the previous device on the source route 300. Here, the wireless interface of the device 106 is to receive the message from the wireless-only device 102. The next entry, or "hop," in the source route 300 specifies how the message is to leave the device 106 (field 306). The message is to leave via the LAN interface. The next hop is the final one, the intended recipient, the device 110 specified in field 308. The format and contents of the source route can vary among the various source routing protocols so Figure 3 is intended merely to illustrate the concepts of a source route. For example, some source routes would include only the intermediate fields 304 and 306 and would consider the source and destination fields 302 and 308, respectively, not to be part of the source route itself. Of course, an actual source route can be quite a bit more complex than the simple example of Figure 3.

The device 102 creates its message intended for the device 110 and includes in it the source route 300. The message is addressed to the next hop on the source route, in'this case device 106. In step 202 of Figure 2a, the message is transmitted into the wireless communications network 100. Both of the other wireless devices 104 and 106 receive the message in step 204 and then examine the message's destination address in step 206. Note that this next hop destination is NOT, in general, the ultimate recipient address in the source route 300. Because that destination address does not match that of the device 104, that device discards the message in step 208.

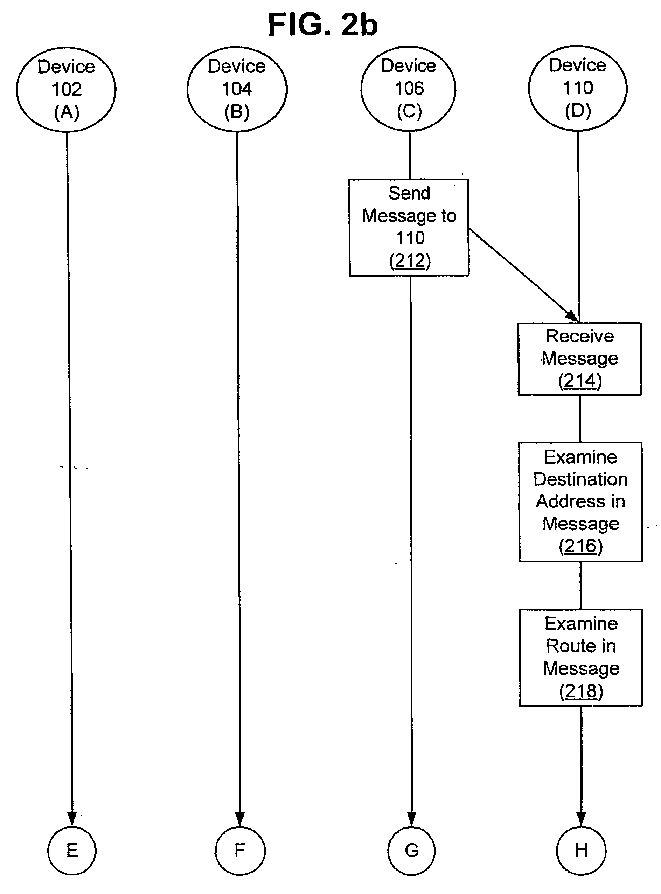

On the other hand, the destination address does match that of the device 106, so that device proceeds, in step 210, to examine the message, particularly the source route 300. By examining the source route 300, the device 106 discovers that it is not the intended recipient of this message. So, in step 212 of Figure 2b, the device 106 finds the next hop in the source route 300, the device 110, and sends the message on.

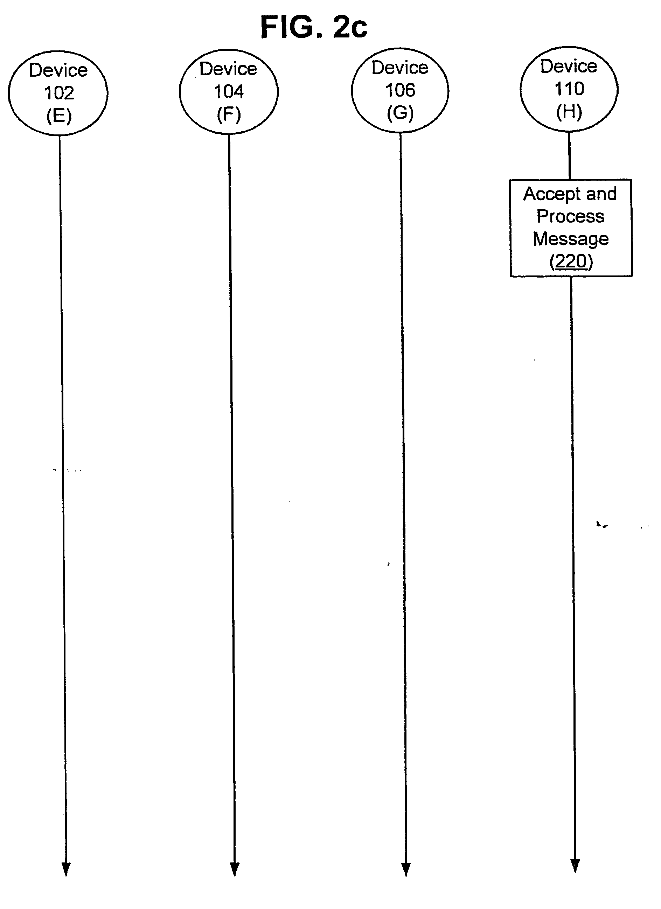

The device 110 receives the message in step 214 and examines the destination address in step 216. Because that address matches that of the device 110, the device 110 proceeds, in step 218, to examine the source route 300 in the message. In step 220 of Figure 2c, the device 110 realizes that it is the intended recipient of the message. The device 110 processes the contents of the message as appropriate.

The above discussion of Figures 2a through 2c mentions neither layered protocols in general nor the specifics of which layers perform which communications tasks. That omission is intentional so that this discussion can provide a very general foundation for the discussion of layered protocols, and particularly of addressing in layered protocols, that follows. This scenario is re-examined to consider layered addressing below, following the discussion accompanying Figure 6.

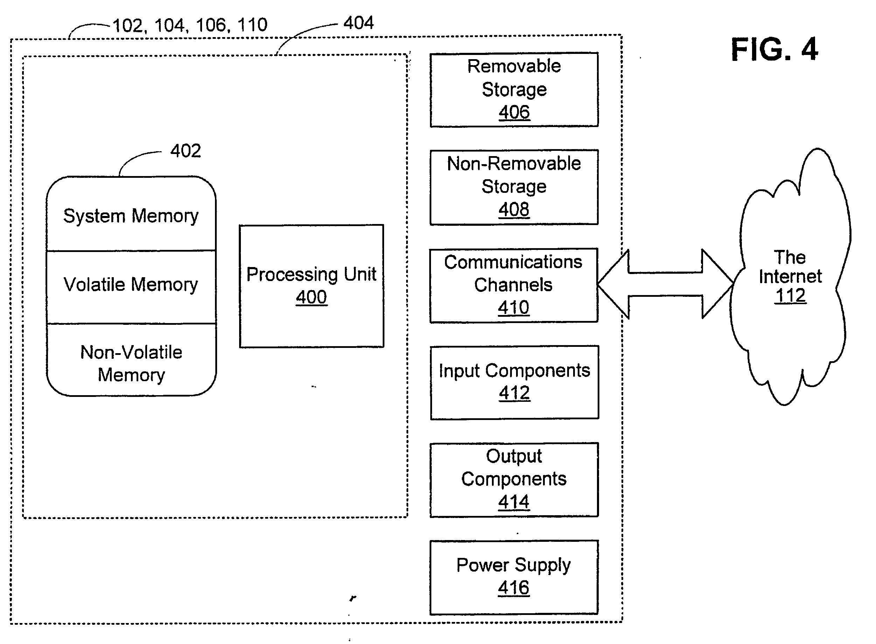

The network devices 102, 104, 106, and 110 of Figure 1 may be of any architecture. Figure 4 is a block diagram generally illustrating an exemplary computer system that supports the present invention. The computer system of Figure 4 is only one example of a suitable environment and is not intended to suggest any limitation as to the scope of use or functionality of the invention. Neither should the device 102 be interpreted as having any dependency or requirement relating to any one or combination of components illustrated in Figure 4. The invention is operational with numerous other general-purpose or special-purpose computing environments or configurations. Examples of well known computing systems, environments, and configurations suitable for use with the invention include, but are not limited to, personal computers, servers, hand-held or laptop devices, tablet devices, multiprocessor systems, microprocessor-based systems, set-top boxes, programmable consumer electronics, network PCs, minicomputers, mainframe computers, and distributed computing environments that include any of the above systems or devices. In its most basic configuration, the device 102 typically includes at least one processing unit 400 and memory 402. The memory 402 may be volatile (such as RAM), non-volatile (such as ROM or flash memory), or some combination of the two. This most basic configuration is illustrated in Figure 4 by the dashed line 404. The device 102 may have additional features and functionality. For example, the device 102 may include additional storage (removable and non-removable) including, but not limited to, magnetic and optical disks and tape. Such additional storage is illustrated in Figure 4 by removable storage 406 and by non-removable storage 408. Computer-storage media include volatile and non-volatile, removable and non-removable, media implemented in any method or technology for storage of information such as computer-readable instructions, data structures, program modules, or other data. Memory 402, removable storage 406, and non-removable storage 408 are all examples of computer-storage media. Computer-storage media include, but are not limited to, RAM, ROM, EEPROM, flash memory, other memory technology, CD-ROM, digital versatile disks, other optical storage, magnetic cassettes, magnetic tape, magnetic disk storage, other magnetic storage devices, and any other media that can be used to store the desired information and that can be accessed by the device 102. Any such computer-storage media may be part of the device 102. The device 102 may also contain communications channels 410 that allow the device to communicate with other devices. Communications channels 410 are examples of communications media. Communications media typically embody computer-readable instructions, data structures, program modules, or other data in a modulated data signal such as a carrier wave or other transport mechanism and include any information delivery media. The term "modulated data signal" means a signal that has one or more of its characteristics set or changed in such a manner as to encode information in the signal. By way of example, and not limitation, communications media include wired media, such as wired networks and direct-wired connections, and wireless media such as acoustic, RF, infrared, and other wireless media. The term "computer-readable media" as used herein includes both storage media and communications media. The device 102 may also have input devices 412 such as a keyboard, mouse, pen, voice-input device, tablet, touch-input device, etc. Output devices 414 such as a display (which may be integrated with a touch-input device), speakers, and printer may also be included. All these devices are well known in the art and need not be discussed at length here.

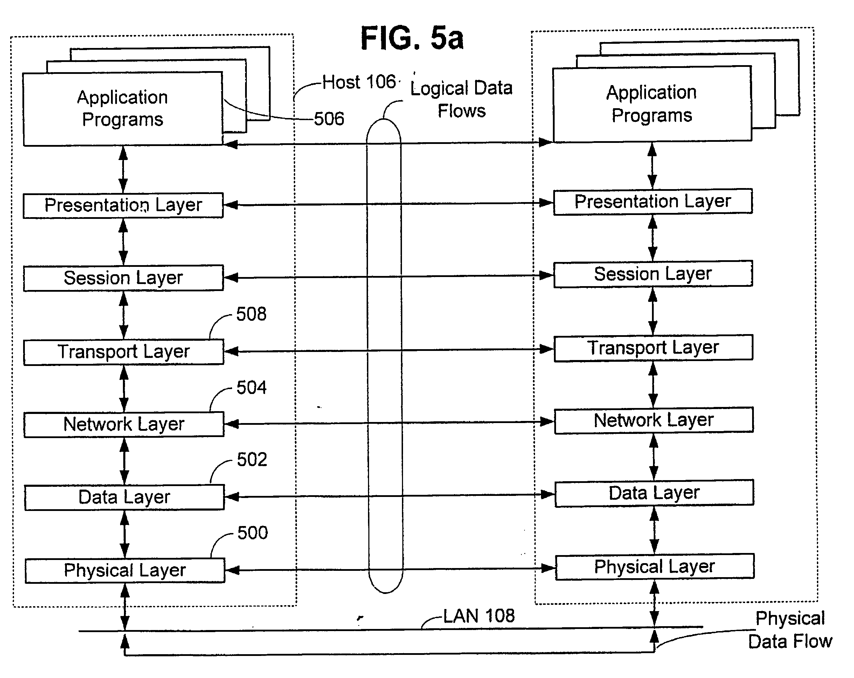

The network devices 102, 104, 106, and 110 can use any of a number of communications protocols. As discussed in the Background section above, many, but not quite all, of today's communications protocols follow the ISO/OSI protocol model, shown in Figure 5a. In this model, the overall task of enabling network communications is divided into subtasks, and those subtasks are each assigned to a logical layer in the protocol stack. Logically, each layer communicates with its peer layer on another device, provides services to the layer above it in the stack, and uses the services provided by the layer below it. Physically, messages flow down the stack from their originator until the physical layer 500 actually transmits them across the medium of the network connection, shown here as the LAN 108. When messages are received by their intended recipient, they are passed up the stack with each layer stripping off and responding to the data meant for it while passing the rest of the message up to the next level. The primary advantage of this layered model is that each protocol layer can communicate with its peers without concerning itself with the myriad details handled by other layers in the protocol stack. That is, each layer performs its communications tasks mostly independently of the tasks performed by the other layers.

It should be remembered that the ISO/OSI protocol stack is a conceptual model only and that no protocol follows it exactly. However, many popular protocols in use today follow this model to a greater or lesser extent, and the model makes discussion of the communications tasks it defines more easily comprehensible.

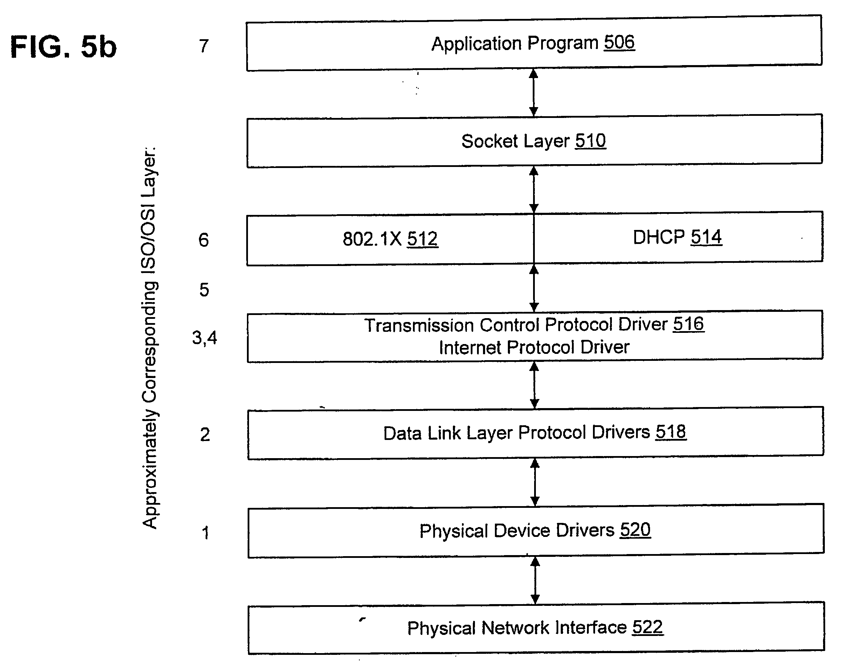

The ISO/OSI model does not specify how the device 102 should internally implement the tasks required to support an ISO/OSI layered communications protocol. Figure 5b shows one possible implementation of the tasks supporting the popular Transmission Control Protocol/Internet Protocol (TCP/IP) stack. In this embodiment, but not necessarily in all embodiments, communications flow up and down a stack of computing components that is closely analogous to the layered stack in the ISO/OSI model. Network communications services are presented to the application program 506 by a socket layer 510. The socket layer 510 insulates the application program 506 from the details of the ISO/OSI communications protocol. This insulation is especially valuable when a device, such as the device 106, is connected to more than one network and is running more than one communications protocol. When an application program 506 calls a routine in the socket layer 510 to send a message to an application program 506 on another device, the request works its way down the stack of protocol components with each component communicating with its peer on the other device as per the ISO/OSI model. Even in this embodiment, however, some components do not map directly to ISO/OSI layers. Some protocols do not implement all of the ISO/OSI layers, as shown here by the lack of a specific layer 5 (Session Layer) component. An implementation may also combine the functionality of several ISO/OSI layers into one component. In Figure 5b, layers 3 (the Network Layer 504 of Figure 5a) and 4 (the Transport Layer 508) are supported by a combined TCP/IP driver 516. A complicated protocol such as TCP/IP requires several tasks beyond the simple transport of data. In Figure 5b, these functions are represented by the 802.1X component 512, which provides authentication services, and by the Dynamic Host Configuration Protocol component 514, which provides for non-static layer 3 addresses.

Figure 6 portrays one possible software implementation that supports the communications tasks of an ISO/OSI protocol. In this exemplary system, application programs 506 are running on the device 106. They communicate through a Layered Server Provider 600 to the standard communications hardware and software provided by the device 106. In this case, a network protocol stack 602, with its internal buffers, handles communications tasks. An input/output manager 604 sets up and tears down communications channels. The network protocol stack 602 talks to a hardware abstraction layer 606 which in turn talks to a network interface 608 that runs the LAN communications link 108. Another network interface (not shown) runs the device 106's wireless link.

Going into greater depth in the scenario of Figures 2a through 2c and using the ISO/OSI layered protocol model of Figure 5a as a guide, the destination addresses used in each hop (steps 202, 206, 212, and 216) are layer 2 addresses. (In IEEE 802 networks, these are called Media Access Control addresses.) These addresses are unique within a local network, but may not be globally unique. Different types of networks (e.g., the wired LAN 108 vs. the wireless network 100) can use different and incompatible address formats. In addition to these layer 2 addresses, a message created by layer 3 or by any higher layer includes the layer 3 addresses of the source and of the intended recipient.

Figure 3 says that the example source route 300 uses protocol interlayer addresses. Prior art source routing protocols use either layer 2 addresses or layer 3 addresses. In any case, a source route is only intelligible to the protocol layer that provides its addresses. Thus, if a source route were to use layer 2 addresses, then the source route would be examined (in steps 210 and 218) by a layer 2 protocol driver 518. Alternatively, a layer 3 address-based source route would be examined by a layer 3 protocol driver 516 in those steps. As explained in the Background section above, the choice of where to place the source routing protocol within the ISO/OSI protocol stack is important because each choice presents both advantages and disadvantages due to the intra-layer compatibility problems of layered protocols. Whichever layer does not receive the source routing protocol can operate obliviously to source routing and can thus retain its own measure of compatibility, but the layer that runs the source routing protocol becomes incompatible with other implementations at its own layer. The use of a protocol interlayer addresses (to use an unfortunate choice of words) the intra-layer incompatibility problem by placing source routing *neither* in layer 2 *nor* in layer 3.

The remainder of this discussion provides details of a specific implementation of source routing in a protocol interlayer that lies between layers 2 and 3 of the ISO/OSI protocol stack. The environment of Figure 1 and the communications scenario of Figures 2a through 2c are again used in the example.

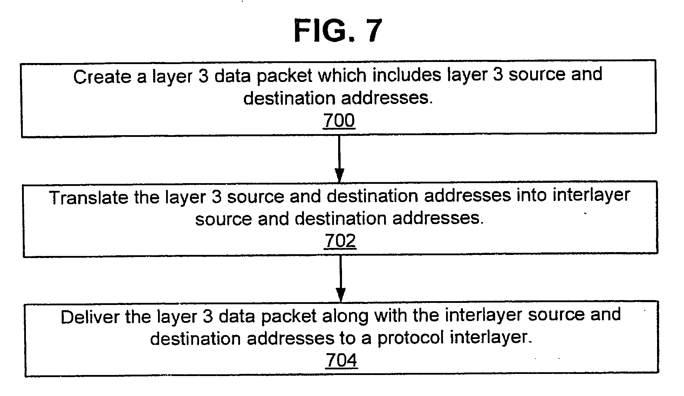

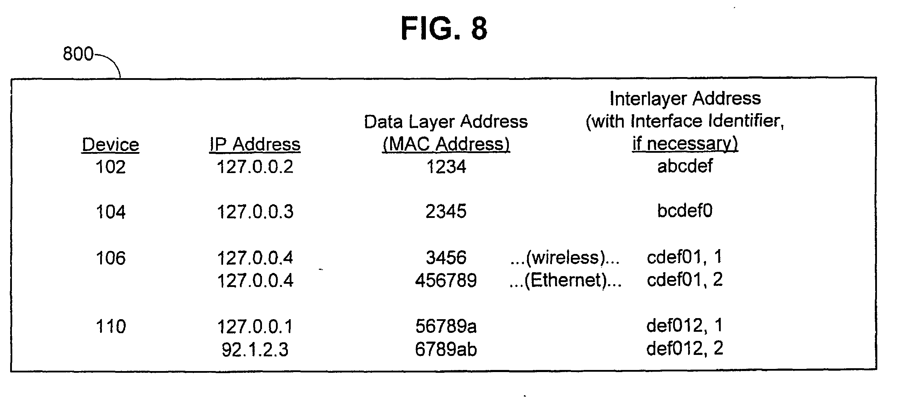

Figure 7 shows how the layer 3 protocol driver 516 of the device 102 begins the scenario. The methods of Figure 7 occur before step 200 of Figure 2a. In step 700, a layer 3 data packet is created containing the layer 3 addresses of the source (the device 102) and of the intended recipient (the device 110). Because the lower protocol layers cannot route the data packet using layer 3 addresses, these addresses are translated in step 702 into addresses specified by the protocol interlayer. This translation process can be a simple lookup into an address association table such as that depicted in Figure 8. In the address table 800, the 'layer 3 (IP) address of a device is used as a key to locate a record that includes the interlayer address for that same device. Note that the layer 3 protocol driver 516 need not understand the format of interlayer addresses: It can simply pull the values from the table 800. In step 704, the layer 3 protocol driver 516 delivers the layer 3 data packet along with the interlayer source and destination addresses to a protocol interlayer.

Note that in some implementations the layer 3 protocol driver 516 can follow the procedure of Figure 7 without being altered in the slightest way to accommodate the protocol interlayer. The layer 3 protocol driver 516 could believe that, in step 702, it is calling for layer 2 addresses. This call is intercepted and interlayer addresses are returned instead. Similarly, the layer 3 protocol driver 516 could believe that in step 704 it is delivering the layer 3 data packet to a layer 2 protocol driver 518 instead of to the protocol interlayer. The binding of the layer 3 and 2 protocols layers is arranged so that the protocol interlayer looks exactly like just another layer 2 protocol driver 518 to the layer 3 protocol driver 516. This is an example where a protocol interlayer can be introduced with no change whatsoever to the protocol driver above it. This possibility has decided advantages for compatibility and widespread implementation.

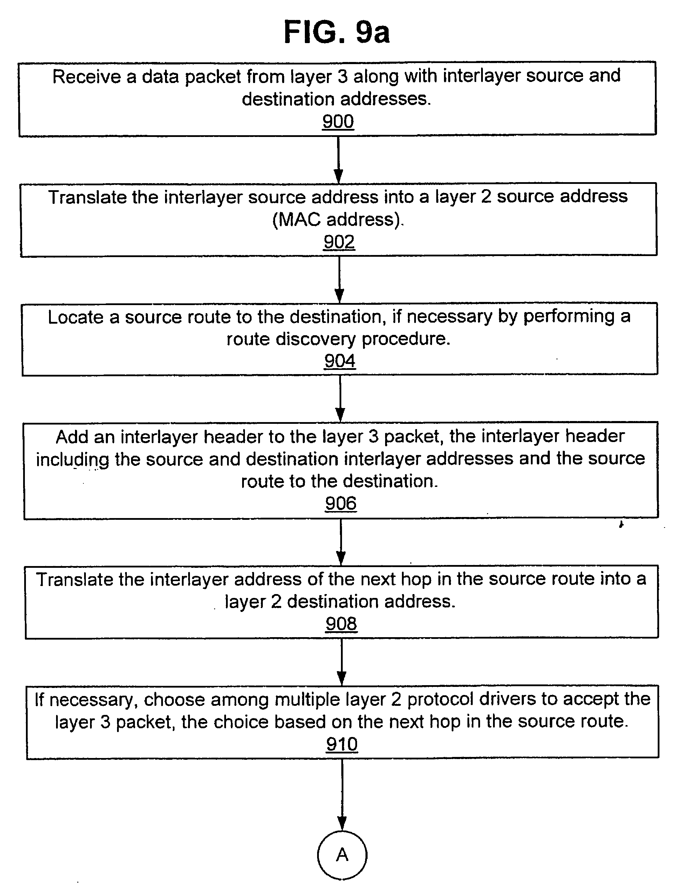

The protocol interlayer receives the data packet from layer 3 in step 900 of Figure 9a. As the received interlayer source address will be unintelligible to the layer 2 protocol driver 518, the interlayer translates this address into a layer 2 source address in step 902. (Actually this translation step is optional because the layer 2 protocol driver 518 probably knows its own layer 2 address.) The translation can use the address association table 800 of Figure 8.

In step 904, the protocol interlayer first determines whether to apply the methods of source routing to the present data packet. If for example, a layer 3 data packet is generated at the device 106 and is intended for the device 110, then the LAN 108 will carry the packet directly, and no source routing is needed. In the scenario of Figures 2a through 2c, on the other hand, source routing is needed to transport the data packet from the source device 102 to the recipient device 110. Knowing this, the protocol interlayer in step 904 (which corresponds to step 200 of Figure 2a) locates an appropriate source route. The details of this step depend upon the source routing protocol used and can be very complex. The device 102 may have already stored an appropriate source route in a table, so that it can simply retrieve the route in step 904. If not, then the device 102 can discover a route by querying the devices around it. In this example, the located source route goes through the device 106 and uses interlayer addresses as shown in Figure 3.

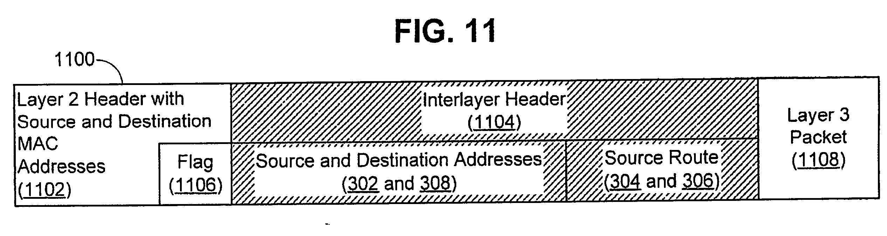

In step 906, the protocol interlayer adds its own header to the layer 3 data packet to create an interlayer data frame. An exemplary format for the interlayer header is discussed below in reference to Figure 11.

The protocol interlayer translates the interlayer address of the next hop into a layer 2 address in step 908. If source routing is not appropriate (e.g., the device 106 is sending directly to the device 110), then the next hop is the recipient device. For a message with a source route, the address is the layer 2 address of the next device in the route. In the present scenario, this is the layer 2 address of the device 106.

In step 910, the protocol interlayer uses the interface index of the interlayer address of the next hop in order to choose a specific layer 2 protocol driver 518 to use to send the message. This step applies when the sending device has more than one layer 2 interface. In the present scenario, this step does not apply to the device 102 because it has only one layer 2 interface.

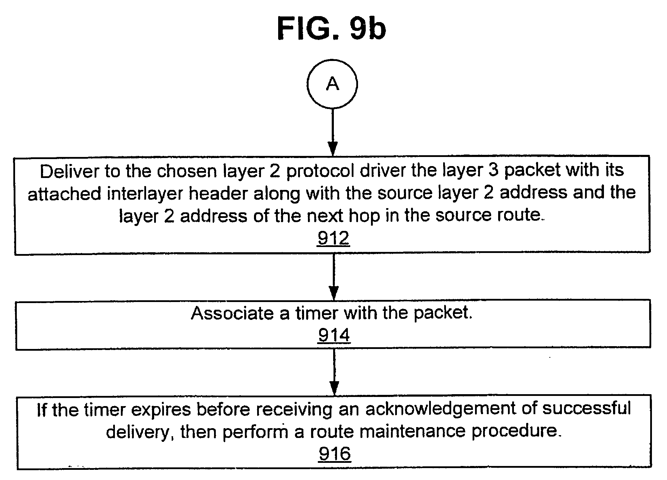

The layer 3 data packet, its attached interlayer header, the source layer 2 address, and the layer 2 address of the next hop are delivered to the chosen layer 2 protocol driver 518 in step 912 of Figure 9b.

Steps 914 and 916 are optional but are specified by some source routing protocols. In these protocols, a timer is associated with the data packet delivered to the layer 2 protocol driver 518 in step 912. If no indication of successful delivery is received (while could come from the intended recipient or from an intermediary device on the source route), then the sending device knows that something is wrong with its chosen source route. This is a common occurrence in ad hoc networks where devices on a chosen source route can move out of range or disappear entirely. If the timer expires, then the source device applies methods specified by the source routing protocol to fix or to replace the source route. The message is then resent using the new source route.

When the layer 2 protocol driver 518 receives the message from the protocol interlayer, it proceeds just as it would had it received the message from the layer 3 protocol driver 516 instead. The layer 2 data frame, addressed to the device 106 and including the layer 3 data packet and the interlayer header, is transmitted by the device 102's wireless transmitter in step 202 of Figure 2a.

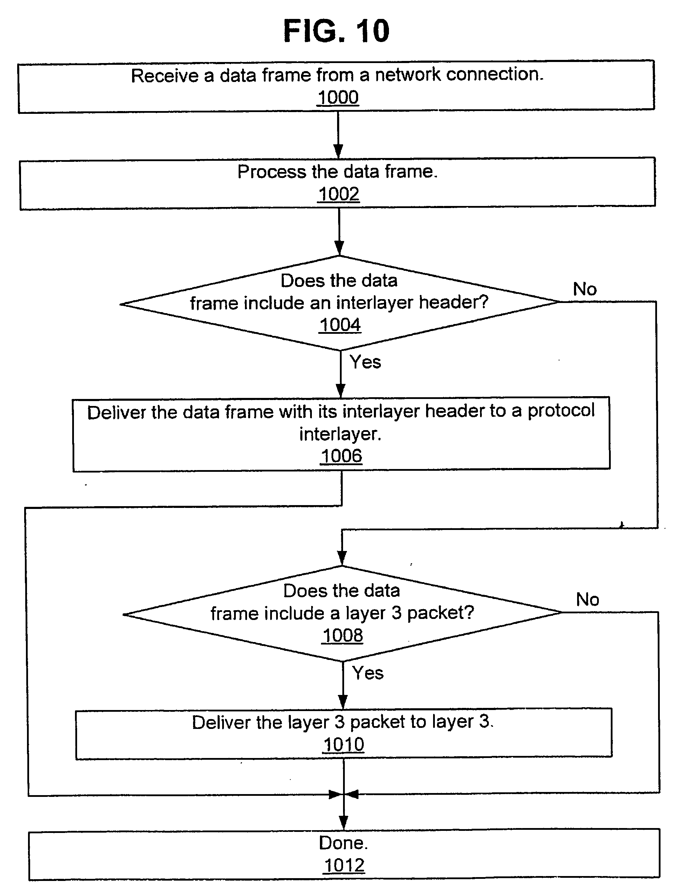

In the scenario of Figures 2a through 2c, there are two places where a layer 2 data frame is received over a network connection: step 204 at the devices 104 and 106 and step 214 at the device 110. In these steps, the receiving layer 2 protocol driver 518 can use the procedure of Figure 10. The layer 2 data frame is received in step 1000 and is processed according to the normal practices of the appropriate layer 2 protocol in step 1002. These practices include comparing the layer 2 destination address in the frame against the address of the current device. (This comparison is performed in steps 206 and 216.) After performing this comparison, the device 104 notes the difference, and, because the data frame is not intended for it, discards the data frame in step 208. Note that because this discard is performed under normal layer 2 practices, it does not rely upon the source route contained in the message.

In contrast to the case with the device 104, the layer 2 destination address comparisons of step 206 on the device 106 and of step 216 on the device 110 reveals that these devices are the intended destinations of the received data frame. Therefore, these devices proceed, in step 1004 of Figure 10, to examine the contents of the data frame. The examination reveals that the data frame contains an interlayer header such as 1104 in Figure 11. Because layer 2 protocols are designed to support multiple, simultaneous layer 3 protocols, these protocols specify values for a flag that tells the layer 2 protocol driver 518 to which layer 3 protocol driver 516 the data frame should be directed. In the present embodiment, that flag is the field 1106. The flag is given a value associated with the interlayer. Thus, the layer 2 protocol driver 518 reads the flag 1106 and responds to its value just like it responds to other values of the flag. The data frame 1100 is passed up to the protocol interlayer just as if the protocol interlayer were simply another layer 3 protocol driver 516. If a data frame is received with no interlayer header, then the layer 2 protocol driver 518 examines the frame for a layer 3 packet in step 1008 and, if one is found, delivers the layer 3 packet to the appropriate layer 3 protocol driver 516 (as determined by the value of the flag) in step 1010.

Note that the introduction of the protocol interlayer only changes the layer 2 protocol driver 518 in that it now must recognize the presence of an interlayer header in step 1004 and deliver it as appropriate. Layer 2 protocols are already familiar with many types of layer 3 flag values, so that this change is simply one of adding another universally recognized value for the flag (in field 1106) to those already recognized by the layer 2 protocol driver 518. Note also that the presence of the interlayer does not necessitate all messages passing through it, but that (as in steps 1008 and 1010) messages can still be passed directly from layer 2 to layer 3 if necessary.

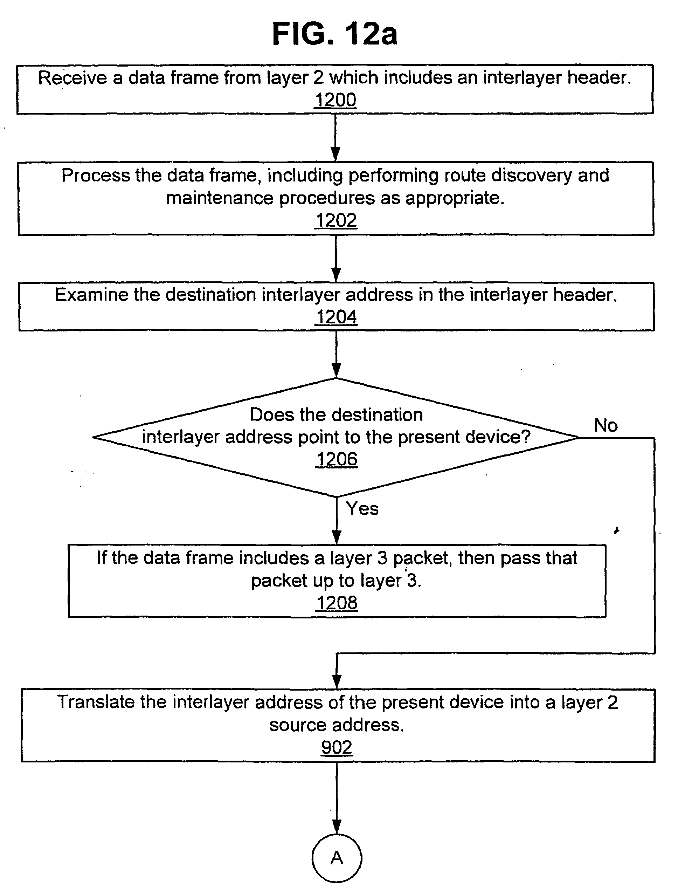

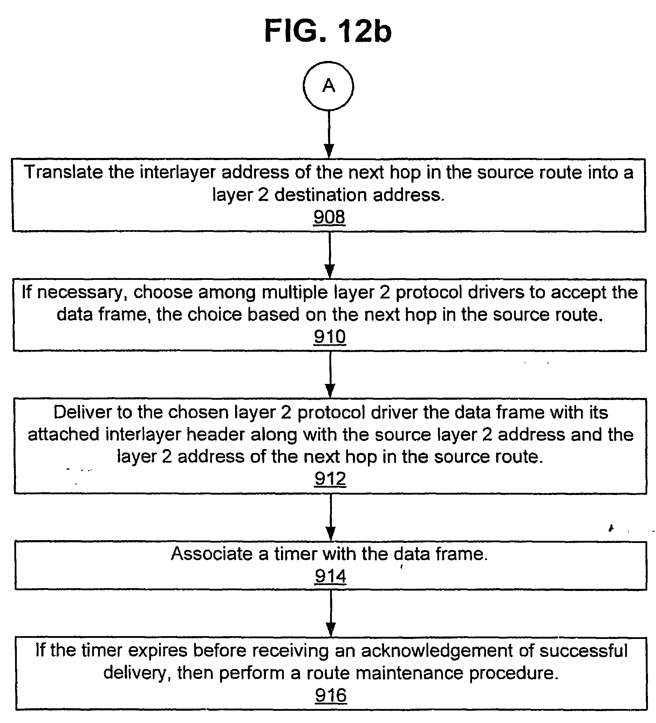

The protocol interlayer receives the data frame 1100 from the layer 2 protocol driver 518 in steps 210 and 218 on the devices 106 and 110, respectively. The receiving interlayers apply the method of Figures 12a and 12b. The data frame 1100 with its interlayer header 1104 is received in step 1200. In step 1202 the device applies the appropriate methods defined by its source routing protocol. Then in step 1204, the receiving device examines the destination interlayer address 308 in the interlayer header 1104. Note that, unlike the layer 2 destination address examined in steps 206 and 216 above, this is the address of the ultimate recipient of the message. The destination interlayer address 308 is compared against the interlayer address assigned to the current device in step 1206. On the device 110 (in step 218 of Figure 2b), this comparison reveals that this device 110 is the intended recipient of the message. The message is then passed on to the layer 3 protocol driver 516 in step 1208 which processes it accordingly (step 220 of Figure 2c).

When the comparison of step 1206 is performed on the device 106, however, this device 106 realizes that it is not the intended recipient of the message. The device 106 then examines the interlayer header 1104 for the interlayer address of the next hop in the source route 300 and prepares to pass the message on to that next device. The procedure for so doing follows that performed by the source device 102 in sending the message to the first device in the source route 300. Figures 12a and 12b emphasize this correspondence by using the same numbering as used previously for steps 902 and 908 through 916. In the scenario of Figures 2a through 2c, the next hop is to the device 110 and uses the LAN 108 network interface of the device 106 (as specified by the interface index in field 306 of the source route 300). The device 106 adds its own source layer 2 address (step 902 of Figure 12a) and the layer 2 address of the device 110 (step 908 of Figure 12b) to the data packet. The packet is then sent down to the layer 2 protocol driver 518 that handles the LAN 108 network interface (step 212 of Figure 2b).

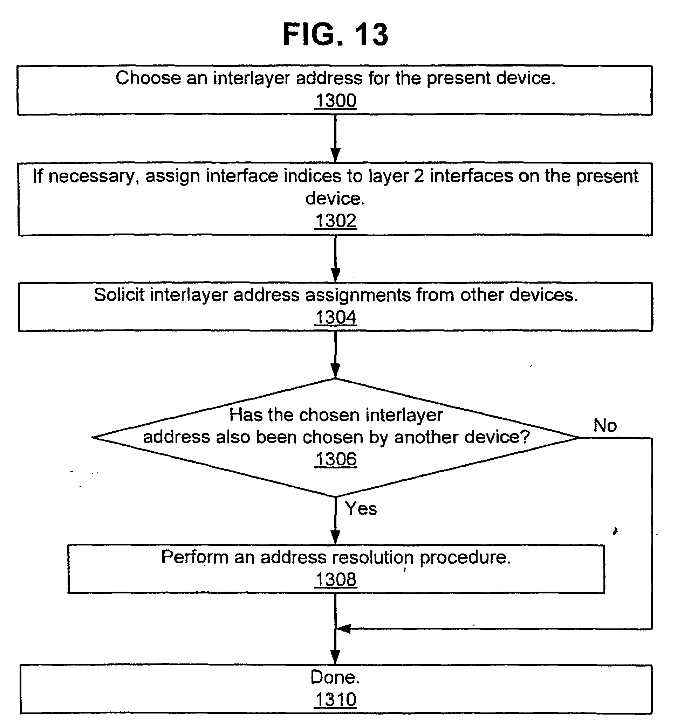

The scenario discussed above illustrates how a protocol interlayer can be added to a protocol stack to handle an important communications task with few or no modifications to the layers above and below it. The details of the operation of the interlayer are dependent upon the particulars of the task, or tasks, it is called upon to perform. Independent of those details, however, are the methods used to assign interlayer addresses. Several methods for assigning addresses well known in the art can be used for interlayer addresses. An example is given in Figure 13. The procedure starts in step 1300 with a device choosing an interlayer address for itself. The choice can be made completely at random. If the device has more than one network interface, then interface indices are assigned to those interfaces in step 1302. The device begins to learn the interlayer addresses of other devices in step 1304. These addresses can, for example, be discovered when they are needed by applying the methods of existing protocols such as Neighbor Discovery and the Address Resolution Protocol. (See below for an ARP example.) If an address conflict is discovered in step 1306, then at least one of the conflicting devices needs to change its address in step 1308. (Actually, the possibility of address conflicts can be made so remote by a proper choice of the size of the interlayer address space that this checking is not strictly necessary.) As the address has no inherent meaning, the procedure in step 1308 could simply involve the device discovering the conflict randomly choosing another address and testing that one for conflicts. The chosen address is stored in association with other addresses in the address association table 800 of Figure 8. Until another conflict is discovered, the procedure ends at step 1310.

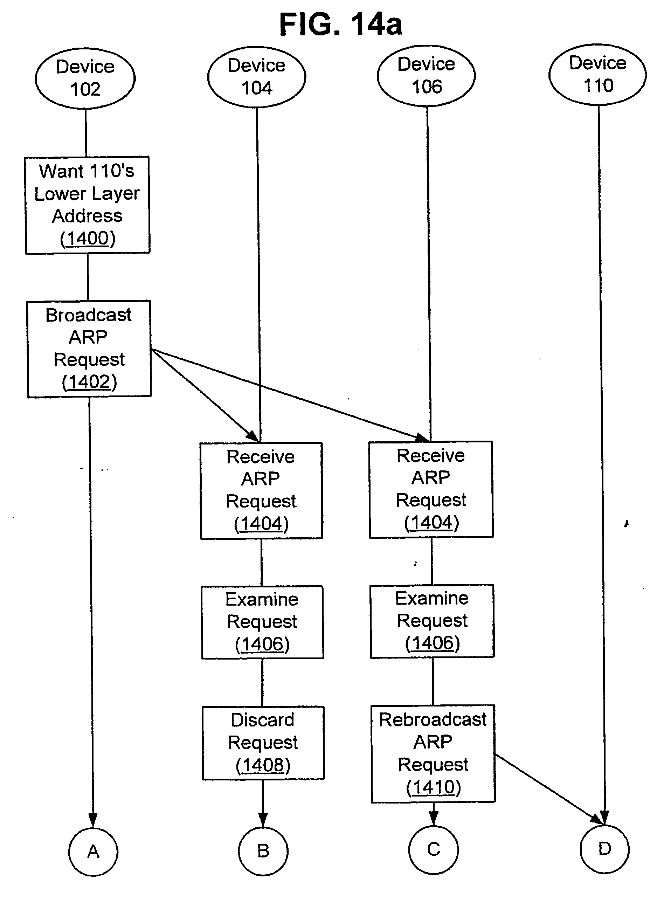

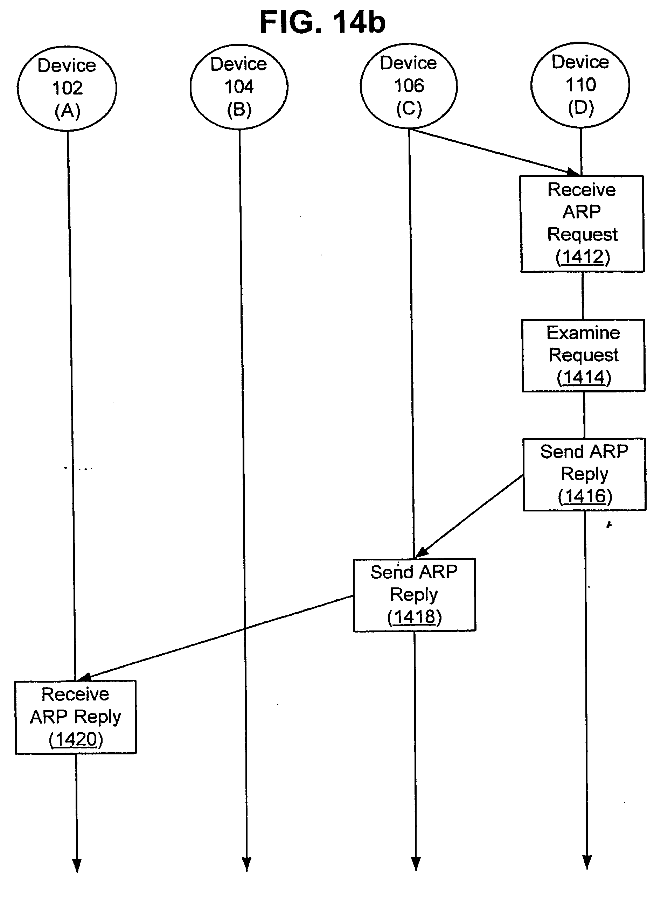

Source routing is just one of the many communications tasks involved in running a multi-layer protocol stack. The methods of the present invention are designed to allow other communications tasks to proceed as before without the need to change to accommodate the protocol interlayer. As one example, and as an example of broadcast interlayer addressing, consider the communications scenario of Figures 14a and 14b. This scenario involves the same devices familiar from Figure 1, but this time the layer 3 protocol driver 516 on the device 102 wishes to discover the layer 2 address associated with the layer 3 address of the device 110. At least that is what the layer 3 protocol driver 516 believes it wishes. However, these devices are actually running a protocol interlayer with interlayer addresses. Therefore, the layer 3 protocol driver 516 really wishes to know the interlayer address associated with the layer 3 address of the device 110. (In the scenarios discussed above, it is assumed that the device 102 already knows this information and stores it in the address association table 800 of Figure 8.)

In the layer 3 protocol known as IPv4, ARP is used to associate a layer 3 address with a layer 2 address. The scenario of Figures 14a and 14b shows how ARP can instead be used to associate a layer 3 address with an interlayer address. The layer 3 protocol driver 516 on the device 102 creates an ARP request packet that includes the target layer 3 address. The destination interlayer address chosen by the layer 3 protocol driver 516 is a broadcast address (possibly all 1s), because the device 102 does not know how to address the message to the intended recipient device 110. (If it knew the address to use, it would not need to invoke ARP.) The broadcast destination interlayer address is translated to a broadcast destination layer 2 address, and the ARP message is transmitted in step 1402.

The ARP request is received by all of the devices in radio range, that is, by the devices 104 and 106 in step 1404. As the destination layer 2 address is a broadcast address, both these devices examine the message's contents in step 1406. The request includes an interlayer header, so the request is passed up to the protocol interlayer on both devices. The protocol interlayer examines the destination address, which is also a broadcast address. The protocol interlayer then passes the ARP request up to the layer 3 protocol driver 516.

Still in step 1406, the layer 3 protocol drivers 516 on both the devices 104 and 106 examine the ARP request and compare the target layer 3 address contained in the request against the layer 3 address assigned to the local device. Neither device finds a match. The device 104 can do no more, so it discards the ARP request in step 1408.

The device 106, however, has two network interfaces. It received the ARP request on the wireless interface, so in step 1410 it passes the ARP request to the other interface, that is, to the LAN 108. The ARP message is again broadcast. The device 110 receives the broadcast ARP request in step 1412 of Figure 14b. It performs the same examination as earlier performed by the devices 104 and 106. This time, however, the device 110 finds a match between its own layer 3 address and the target address contained in the ARP request. Then in step 1416 the device 110 sends an ARP reply containing its own interlayer address. The ARP reply makes it way back to the original requestor device 102. That device can now populate its address association table 800 with the device 110's layer 3 address and associated interlayer address.

During all of this ARP scenario, the layer 3 protocol drivers 516 on each device act identically to how they would act were there no protocol interlayers in place. Thus, the presence of the interlayer changes the results of ARP (from creating a layer 3/layer 2 address association to creating a layer 3/interlayer address association) without requiring any change in the layer 3 protocol drivers 516 that run ARP. This example shows how the protocol interlayer can perform its own communications tasks without disturbing the communications tasks of other layers.

In view of the many possible embodiments to which the principles of the present invention may be applied, it should be recognized that the embodiments described herein with respect to the drawing figures are meant to be illustrative only and should not be taken as limiting the scope of the invention. For example, those of skill in the art will recognize that protocol interlayers can be developed to cover situations other than source routing without departing from the spirit of the invention. Although the invention is described in terms of software modules or components, those skilled in the art will recognize that such may be equivalently replaced by hardware components. Therefore, the invention as described herein contemplates all such embodiments as may come within the scope of the following claims and equivalents thereof.

## Claims

1. In a communications environment supporting a multi-layer protocol, the multi-layer protocol comprising an upper protocol layer and a lower protocol layer, a method for providing a protocol interlayer, the protocol interlayer operating logically between the upper protocol layer and the lower protocol layer, the method comprising:
receiving data from the upper protocol layer, the data comprising a destination interlayer address;
processing the received data, the processing comprising placing the destination interlayer address in an interlayer header, adding the interlayer header to the data, and adding a destination lower layer address to the data; and
delivering the processed data to the lower protocol layer.

2. The method of claim 1 wherein the multi-layer protocol follows an International Standards Organization/Open Systems Interconnection model (ISO/OSI); wherein the upper protocol layer is an Internetworking Protocol; and wherein the lower protocol layer is a Data Link Protocol.

3. The method of claim 2 wherein the Data Link Protocol is an Institute of Electrical and Electronics Engineers (IEEE) 802 protocol and wherein the Internetworking Protocol is selected from the group consisting of: IPv4, IPv6, and IPX.

4. The method of claim 1 wherein the method is performed on one computing device, wherein receiving data from the upper protocol layer comprises receiving data from a software component on the computing device, and wherein delivering the processed data to the lower protocol layer comprises delivering the processed data to a software component on the computing device.

5. The method of claim 4 wherein the computing device is selected from the group consisting of: a host device and a router device.

6. The method of claim 1 wherein receiving data from the upper protocol layer comprises receiving a data packet to be sent to the destination interlayer address.

7. The method of claim 6 wherein the data packet comprises a message of a protocol selected from the group consisting of: Address Resolution Protocol (ARP) and Neighbor Discovery (ND) protocol.

8. The method of claim 1 wherein the destination interlayer address is of the same format as the destination lower layer address.

9. The method of claim 1 wherein the destination interlayer address is of a format different from that of the destination lower layer address.

10. The method of claim 1 wherein the destination interlayer address is of a format selected from the group consisting of: a unicast address, a multicast address, and a broadcast address.

11. The method of claim 1 wherein the destination interlayer address is of a format of an IEEE Media Access Control address.

12. The method of claim 1 wherein the destination interlayer address comprises an interface index.

13. The method of claim 1 wherein the received data comprise a source interlayer address.

14. The method of claim 1 wherein processing the received data comprises translating the destination interlayer address to a corresponding lower layer address.

15. The method of claim 14 wherein adding a destination lower layer address to the data comprises adding a translation of the destination interlayer address to the data.

16. The method of claim 14 wherein processing the received data comprises applying methods of an ad hoc routing protocol.

17. The method of claim 16 wherein the ad hoc routing protocol is selected from the group consisting of: Ad Hoc On-Demand Distance Vector routing protocol, Core Extraction Distributed Ad Hoc Routing protocol, Dynamic Source Routing protocol, Loop-Based Source Routing Protocol, Multi-Path Dynamic Source Routing protocol, Optimized Link State Routing protocol, Power-Aware Source Routing protocol, Security-Aware Adaptive Dynamic Source Routing Protocol, and Topology Dissemination Based on Reverse-Path Forwarding routing protocol.

18. The method of claim 16 wherein processing the received data comprises locating a source route to the destination interlayer address.

19. The method of claim 18 wherein locating a source route to the destination interlayer address comprises accessing a stored source route.

20. The method of claim 18 wherein locating a source route to the destination interlayer address comprises discovering a source route by applying methods of the ad hoc routing protocol.

21. The method of claim 18 wherein processing the received data comprises placing the located source route in an interlayer header and adding the interlayer header to the data.

22. The method of claim 21 wherein the added interlayer header comprises interlayer addresses.

23. The method of claim 18 wherein adding a destination lower layer address to the data comprises adding a lower layer address of a next hop on the located source route.

24. The method of claim 18 further comprising:
associating a timer with the received data; and
if the associated timer expires before an acknowledgement of successful delivery is received, then performing maintenance on the source route by applying methods of the ad hoc routing protocol.

25. The method of claim 24 wherein the acknowledgement of successful delivery acknowledges successful delivery to an address selected from the group consisting of: the destination interlayer address and an address of a next hop on the located source route.

26. The method of claim 1 wherein adding a destination lower layer address to the data comprises adding a lower layer address of a format selected from the group consisting of: a unicast address, a multicast address, and a broadcast address.

27. The method of claim 1 wherein adding a destination lower layer address to the data comprises adding a lower layer address of a format of an IEEE Media Access Control address.

28. The method of claim 1 wherein the multi-layer protocol comprises a plurality of lower protocol layers, the plurality of lower protocol layers operating logically in parallel, the method further comprising:
choosing one of the plurality of lower protocol layers for delivery of the processed data, the choosing based, at least in part, on the destination interlayer address.

29. The method of claim 28 wherein the destination interlayer address comprises an interface index and wherein choosing one of the plurality of lower protocol layers is based, at least in part, on the interface index.

30. The method of claim 28 wherein the plurality of lower protocol layers comprises a plurality of IEEE 802 Data Link Protocols.

31. A computer-readable medium containing computer-executable instructions for performing a method for providing a protocol interlayer, the protocol interlayer operating logically between an upper protocol layer and a lower protocol layer of a multi-layer protocol, the method comprising:
receiving data from the upper protocol layer, the data comprising a destination interlayer address;
processing the received data, the processing comprising placing the destination interlayer address in an interlayer header, adding the interlayer header to the data, and adding a destination lower layer address to the data; and
delivering the processed data to the lower protocol layer.

32. In a communications environment supporting a multi-layer protocol, the multi-layer protocol comprising an upper protocol layer and a lower protocol layer, a method for providing a protocol interlayer, the protocol interlayer operating logically between the upper protocol layer and the lower protocol layer, the method comprising:
receiving data from the lower protocol layer, the data comprising an interlayer header and a destination interlayer address;
processing the received data, the processing comprising examining the destination interlayer address; and
based, at least in part, on the examination of the received destination interlayer address, deciding whether to deliver the processed data to the upper protocol layer.

33. The method of claim 32 wherein receiving data from the lower protocol layer comprises receiving a data packet sent to the destination interlayer address.

34. The method of claim 33 wherein the data packet comprises a message of a protocol selected from the group consisting of: ARP and ND.

35. The method of claim 32 wherein the destination interlayer address comprises an interface index.

36. The method of claim 32 wherein examining the destination interlayer address comprises comparing the destination interlayer address with an interlayer address assigned to a device running the method and wherein the decision is made to deliver the processed data to the upper protocol layer if the destination interlayer address matches the interlayer address assigned to the device running the method.

37. The method of claim 32 wherein processing the received data comprises applying methods of an ad hoc routing protocol.

38. The method of claim 37 wherein the ad hoc routing protocol is selected from the group consisting of: Ad Hoc On-Demand Distance Vector routing protocol, Core Extraction Distributed Ad Hoc Routing protocol, Dynamic Source Routing protocol, Loop-Based Source Routing Protocol, Multi-Path Dynamic Source Routing protocol, Optimized Link State Routing protocol, Power-Aware Source Routing protocol, Security-Aware Adaptive Dynamic Source Routing Protocol, and Topology Dissemination Based on Reverse-Path Forwarding routing protocol.

39. The method of claim 37 wherein processing the received data comprises examining a source route contained in the received data.

40. The method of claim 39 wherein the source route comprises interlayer addresses.

41. The method of claim 40 wherein the source route comprises the destination interlayer address.

42. The method of claim 39 wherein examining the destination interlayer address comprises comparing the destination interlayer address with an interlayer address assigned to a device running the method and wherein if the destination interlayer address does not match the interlayer address assigned to the device running the method, then:
finding an address of a next hop in the source route;
adding a destination lower layer address of the next hop in the source route to the data; and
delivering the processed data to the lower protocol layer.

43. The method of claim 42 wherein the method is performed on one computing device and
wherein delivering the processed data to the lower protocol layer comprises delivering the processed data to a software component on the computing device.

44. The method of claim 42 further comprising:
associating a timer with the received data; and
if the associated timer expires before an acknowledgement of successful delivery is received, then perfonning maintenance on the source route by applying methods of the ad hoc routing protocol.

45. The method of claim 44 wherein the acknowledgement of successful delivery acknowledges successful delivery to an address selected from the group consisting of: the destination interlayer address and the address of the next hop on the located source route.

46. The method of claim 42 wherein the multi-layer protocol comprises a plurality of lower protocol layers, the plurality of lower protocol layers operating logically in parallel, the method further comprising:
choosing one of the plurality of lower protocol layers for delivery of the processed data, the choosing based, at least in part, on the address of the next hop in the source route.

47. The method of claim 46 wherein the address of the next hop in the source route comprises an interface index and wherein choosing one of the plurality of lower protocol layers is based, at least in part, on the interface index.

48. A computer-readable medium containing computer-executable instructions for performing a method for providing a protocol interlayer, the protocol interlayer operating logically between an upper protocol layer and a lower protocol layer of a multi-layer protocol, the method comprising:
receiving data from the lower protocol layer, the data comprising an interlayer header and a destination interlayer address;
processing the received data, the processing comprising examining the destination interlayer address; and
based, at least in part, on the examination of the received destination interlayer address, deciding whether to deliver the processed data to the upper protocol layer.

49. In a communications environment supporting a multi-layer protocol, the multi-layer protocol comprising an upper protocol layer and a lower protocol layer, a method for the lower protocol layer to work with a protocol interlayer, the protocol interlayer operating logically between the upper protocol layer and the lower protocol layer, the method comprising:
receiving data;
processing the received data, the processing comprising examining the received data for an interlayer header; and
if an interlayer header is found in the received data, then delivering the processed data to the protocol interlayer.

50. The method of claim 49 wherein the received data comprise a data packet to be sent to the interlayer address.

51. The method of claim 50 wherein the data packet comprises a message of a protocol selected from the group consisting of: ARP and ND.

52. A computer-readable medium containing computer-executable instructions for performing a method for a lower protocol layer to work with a protocol interlayer, the protocol interlayer operating logically between an upper protocol layer and the lower protocol layer of a multi-layer protocol, the method comprising:
receiving data;
processing the received data, the processing comprising examining the received data for an interlayer header; and
if an interlayer header is found in the received data, then delivering the processed data to the protocol interlayer.

53. In a communications environment supporting a multi-layer protocol, the multi-layer protocol comprising an upper protocol layer and a lower protocol layer, a method for a protocol interlayer to assign an interlayer address, the protocol interlayer operating logically between the upper protocol layer and the lower protocol layer, the method comprising:
choosing an interlayer address for a computing device with a lower layer address;
storing the chosen interlayer address in association with the lower layer address; and
eliciting interlayer address/lower layer address associations from other computing devices.

54. The method of claim 53 wherein the choosing is based, at least in part, on a random number.

55. The method of claim 53 wherein the multi-layer protocol comprises a plurality of lower protocol layers, the plurality of lower protocol layers operating logically in parallel, the method further comprising:
choosing an interface index; and
storing the chosen interface index in association with the chosen interlayer address, with the lower layer address, and with one of the plurality of lower protocol layers.

56. The method of claim 53 wherein eliciting interlayer address/lower layer address associations comprises:
listening to received data; and
extracting interlayer address/lower layer address associations from the received data.

57. The method of claim 53 wherein eliciting interlayer address/lower layer address associations comprises applying methods of a protocol selected from the group consisting of: ARP, ND, Neighbor Solicitation/Neighbor Advertisement and Router Solicitation/Router Advertisement.

58. A computer-readable medium containing computer-executable instructions for performing a method for a protocol interlayer to assign an interlayer address, the protocol interlayer operating logically between an upper protocol layer and a lower protocol layer of a multi-layer protocol, the method comprising:
choosing an interlayer address for a computing device with a lower layer address;
storing the chosen interlayer address in association with the lower layer address; and
eliciting interlayer address/lower layer address associations from other computing devices.

59. In a communications environment supporting a multi-layer protocol, the multi-layer protocol comprising an upper protocol layer and a lower protocol layer, a system for providing a protocol interlayer, the protocol interlayer operating logically between the upper protocol layer and the lower protocol layer, the system comprising:
the upper protocol layer configured for translating a destination upper layer address to a corresponding destination interlayer address, for adding the destination interlayer address to a set of data, and for delivering the set of data with the added destination interlayer address to the protocol interlayer;
the protocol interlayer configured for receiving the set of data from the upper protocol layer, for processing the received data, the processing comprising placing the destination interlayer address in an interlayer header, adding the interlayer header to the data, and adding a destination lower layer address to the data; and
the lower protocol layer configured for receiving the processed data and for delivering the processed data to the destination lower layer address.

60. The system of claim 59 wherein a first computing device comprises the upper protocol layer, the protocol interlayer, and the lower protocol layer.

61. The system of claim 60 wherein delivering the set of data from the upper protocol layer to the protocol interlayer comprises delivering the set of data from a first software component to a second software component on the first computing device and wherein delivering the processed data from the protocol interlayer to the lower protocol layer comprises delivering the data from a third software component to a fourth software component on the first computing device.

62. The system of claim 60 wherein the lower protocol layer is further configured for receiving data from a second computing device, for processing the received data, the processing comprising examining the received data for an interlayer header, and for delivering the processed data to the protocol interlayer if an interlayer header is found in the received data;
wherein the protocol interlayer is further configured for receiving the lower-layer--processed data, for processing the received data, the processing comprising examining the interlayer header, and for deciding whether to deliver the processed data to the upper protocol layer, the deciding based, at least in part, on the examination of the received interlayer header; and
wherein the upper layer protocol is further configured for receiving the protocol-interlayer-processed data.

63. The system of claim 62 wherein the interlayer header comprises a source route and wherein the protocol interlayer is further configured for comparing the destination interlayer address with an interlayer address assigned to the first computing device and, if the destination interlayer address does not match the interlayer address assigned to the first computing device, then for finding an address of a next hop in the source route, for adding a destination lower layer address of the next hop in the source route to the processed data, and for delivering the processed data to the lower protocol layer.

64. The system of claim 60 wherein the protocol interlayer is further configured for choosing an interlayer address for the first computing device, the first computing device having a lower layer address, for storing the chosen interlayer address in association with the lower layer address, and for eliciting interlayer address/lower layer address associations from other computing devices.

65. The system of claim 59 further comprising:
a plurality of lower protocol layers, the plurality of lower protocol layers operating logically in parallel; and
wherein the protocol interlayer is further configured for choosing one of the plurality of lower protocol layers for delivery of the processed data, the choosing based, at least in part, on the destination interlayer address.

66. The system of claim 65 wherein the destination interlayer address comprises an interface index and wherein the protocol interlayer is further configured for choosing one of the plurality of lower protocol layers based, at least in part, on the interface index.

67. A computer-readable medium containing computer-executable instructions for providing a system for providing a protocol interlayer, the protocol interlayer operating logically between an upper protocol layer and a lower protocol layer of a multi-layer protocol, the system comprising:
the upper protocol layer configured for translating a destination upper layer address to a corresponding destination interlayer address, for adding the destination interlayer address to a set of data, and for delivering the set of data with the added destination interlayer address to the protocol interlayer;
the protocol interlayer configured for receiving the set of data from the upper protocol layer, for processing the received data, the processing comprising placing the destination interlayer address in an interlayer header, adding the interlayer header to the data, and adding a destination lower layer address to the data; and
the lower protocol layer configured for receiving the processed data and for delivering the processed data to the destination lower layer address.

68. A computer-readable medium containing an address association data structure, the address association data structure comprising:
a first data field containing data representing an upper protocol layer address;
a second data field containing data representing a protocol interlayer address; and
a third data field containing data representing a lower protocol layer address.

69. The address association data structure of claim 68 wherein the upper protocol layer address is an Internetworking Protocol address and wherein the lower protocol layer address is a Data Link Protocol address.

70. The address association data structure of claim 69 wherein the Data Link Protocol address is an IEEE Media Access Control address.

71. The address association data structure of claim 68 wherein the protocol interlayer address is of the same format as the lower protocol layer address.

72. The address association data structure of claim 68 wherein the protocol interlayer address is of a format different from that of the lower protocol layer address.

73. The address association data structure of claim 68 wherein the protocol interlayer address comprises an interface index.

74. A computer-readable medium containing a protocol interlayer message structure, the protocol interlayer message structure comprising:
a first data field containing data representing a lower protocol layer header;
a second data field containing data representing a protocol interlayer header, the second data field comprising a third data field and a fourth data field;
the third data field containing data representing a flag identifying the protocol interlayer header; and
the fourth data field containing data representing a protocol interlayer address.

75. The protocol interlayer message structure of claim 74 wherein the lower protocol layer header is an IEEE 802 Data Link Protocol header.

76. The protocol interlayer message structure of claim 74 wherein the protocol interlayer address is of a format selected from the group consisting of: a unicast address, a multicast address, and a broadcast address.

77. The protocol interlayer message structure of claim 74 wherein the protocol interlayer address is of a format of an IEEE Media Access Control address.

78. The protocol interlayer message structure of claim 74 wherein the protocol interlayer address comprises an interface index.

79. The protocol interlayer message structure of claim 74 wherein the protocol interlayer header comprises a source route.
